(19) Europäisches Patentamt

European Patent Office

Office européen des brevets

(11) EP 0 632 404 B1

## (12) EUROPEAN PATENT SPECIFICATION

(45) Date of publication and mention
of the grant of the patent:
**29.12.1997 Bulletin 1997/52**

(51) Int Cl.⁶: **G06K 9/64**, G06K 9/62

(21) Application number: 93110481.4

(22) Date of filing: 01.07.1993

(54) **Pattern recognition by generating and using zonal features and anti-features**

Mustererkennung durch Erzeugung und Benutzung zonenweiser Merkmale und Anti-Merkmale

Reconnaissance de formes par génération et utilisation de caractéristiques zonales et des anti-caractéristiques

(84) Designated Contracting States:
DE FR GB

(43) Date of publication of application:
**04.01.1995 Bulletin 1995/01**

(73) Proprietor: **International Business Machines Corporation**
**Armonk, N.Y. 10504 (US)**

(72) Inventors:
• **Maier, Udo**
**D-7277 Wildberg (DE)**

• **Ruppert. Werner**
**D-7036 Schönaich (DE)**

(74) Representative: **Rach, Werner, Dr. et al**
**IBM Deutschland**
**Informationssysteme GmbH,**
**Patentwesen und Urheberrecht**
**70548 Stuttgart (DE)**

(56) References cited:
US-A- 4 887 303     US-A- 5 204 914

## Description

The present invention pertains to a system for pattern recognition and a system for generating feature masks being used in the pattern recognition process.

The recognition of pattern, for example in the form of printed or written text by optical means is existing as long as digital image processing exists. Generally speaking, pattern recognition means the classification of a given unknown pattern, for example a text pattern, consisting of characters and numbers, into one of a number of standard classes, i. e. characters in the ASCII code table.

This recognition process is usually done in different steps as explained in the following in general terms:

The image of a document is scanned, for example in vertical scans when it passes under a read-head. As read-head e.g. a charged coupled device (CCD) array can be used.

The raw image is captured at a resolution of, for example 240 PELS/inch (picture element/per inch). Each PEL in the raw image might be an eight bit quantization of the intensity of the picture element measured by the CCD array.

In a next step a thresholding process is applied to the PELS of the raw image. This thresholding process might be a dynamic one or a fixed thresholding value can be used. In the thresholding process the intensity of each PEL is clipped to either black or white for generating a binary black/white image.

The generated black/white video image is input to a segmentation or framing process in the next step. In the segmentation process characters inside a trackband are identified and the characters or generally speaking the patterns are registered into a frame.

The next performed step is called feature extraction. The feature extraction process uses information about the character font or generally speaking information about the different forms and shapes of the specific set of patterns. These features are Boolean expressions of characters or pattern fragments.

In the document readers IBM 3890/XP, 3891/XP and 3892/XP which are widely used and known for character recognition especially in the banking area, all features are designed manually to allow high discrimination capability between the character classes of the used font. For example, there are necessary 96 features to do recognition of the OCR A font. For the also well known OCR B font there are 102 features necessary.

It is an extreme disadvantage of this manual mode that additional fonts require a new feature design development cycle, training runs and fine tuning of the features. Furthermore, there exists a dependency between the feature design and the feature extraction and this process is an extremely labor-intensive one, often requiring a team of engineers to complete the task for a given font. To save processing time in the feature extraction process, the number of bits tested in the input character image matrix must be kept to a minimum. This necessitates a careful trade-off between reliability of the feature extraction process and the speed of its execution. Also aided by batch-oriented computer programs, the task of picking which bits to test in the input character image matrix falls to the recognition system development engineer. As the practical feature design cannot be carried out in isolation from the task of designing the process to extract the features, this feature and feature extraction design process is a very labor-intensive and cumbersome one.

As already mentioned, each feature is described by a "Boolean" expression and contains AND and OR terms. The output of the feature extraction process is a feature vector. Each feature is addressed by a bit in this feature vector f.

The final step of the recognition process is called the linear decision process. A coefficient storage or weight table is applied to the feature vector f to calculate a class sum for each character class. The character class with the highest class sum is taken if the highest class sum diminished by the next highest class sum is greater than a certain confidence level.

From IBM Technical Disclosure Bulletin, Vol. 34, No. 4A, September 1991, pp. 469-472, a method is known for automatic character recognition suitable for machine printed fixed-font characters. This known method intends to eliminate the highly time- and labor-intensive process for feature design and feature extraction. For that purpose it is proposed to input a labelled training set immediately to a neural network. The neural network training algorithms discovers salient features of character images within the training set and uses these self-generated features in the classification process.

This known method makes use of a fully interconnected feed-forward artificial neural network, not disclosing in further details the underlying methodology. Thus, an application to a classifier not including an artificial neural network is not possible.

In document D1, Y. Hongo: "Character Reading Method", United States Patent No. 4,887,303, filed: February 14, 1989, Date of Patent: December 12, 1989, a method is described that determines unknown character by comparing matrices representing the unknown character with matrices representing known dictionary characters and determining the deviation between matrices for the unknown and the dictionary characters. In order to extract small differences between local portions of the characters, matrices for the character and for the background surroundings of the character are obtained.

Document US-A-5 204 914, published April 20, 1993, discloses emphasizing those pixels of a template that distinguish a trained character from a similar one (like O and Q). It does so by repeatedly changing the weights of the pixels until the correlation coefficients with all the other characters in the font fall below a threshold.

It is the object of the present invention, to provide a method and a system for pattern recognition and for generating feature masks in an automatic way, thus avoiding the time-consuming manual feature design process and also providing a system that is able to train a classifier not necessitating a artificial neural network.

This object as well as other objects are basically solved by applying the features laid down in the independent claims.

Further advantageous embodiments of the present invention are laid down in the dependent subclaims. The advantages of these embodiments are either self-explaining or explained later-on in connection with the specific description.

The feature generation technique in accordance with the present invention uses zonal features and anti-features, thus allowing a fully automated feature generation technique which allows also training of new character classes in a very short time of, for example few minutes. The system is suitable for concurrent learning through normal operation. For each meaning class the different shape classes are generated by statistical means and the weighted zonal positive features are derived. In parallel to that weighted anti-features are trained which increase the accuracy of classification substantially. The classification process is repeated iteratively with decreasing number of probable candidates following a decision scheme. Thus, the invention provides a classifier implementing high accuracy recognition, especially of code line font characters with low print quality. Thus, banking requirements are fulfilled also considering stroke brakes, voids and unexpecting touching strokes that are normal in the banking environment.

In the following more detailed description the invention will be explained in connection with embodiments shown in the drawing in which:

Fig. 1 shows an example for features design manually;

Fig. 2 shows an example for the linear decision process used in connection with systems having manually designed feature extraction;

Fig. 3 shows examples of ideal masks;

Fig. 4 shows examples of feature masks;

Fig. 5 shows a feature class example for the character "0" of the OCR A font;

Fig. 6 shows the several features of the character "0" in different grey levels representing different weights of the respective zonal features;

Fig. 7 shows the anti-features of the character "0", also in different grey values representing different weighting of the anti-features;

Fig. 8 shows the zonal features in different grey levels representing different weights of the number "4";

Fig. 9 shows the anti-features in grey level representations of the number "4"; and

Fig. 10 shows examples for a recognition.

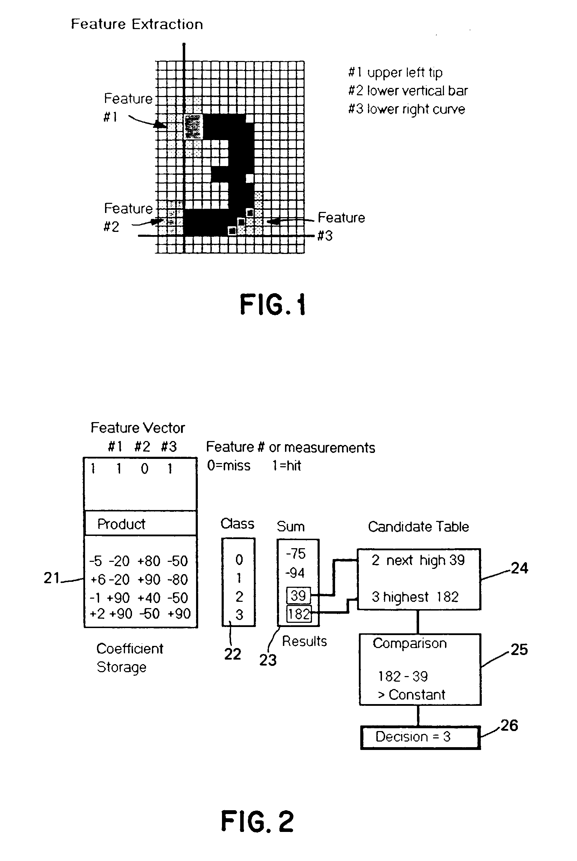

Fig. 1 shows an example for feature extraction on the basis of the character "3". This number is shown in a pixel grid. Indicated are feature # 1, the upper left tip, feature # 2, the lower vertical bar, and for feature # 3 is the lower right curve indicated by an arrow. Dependent on the used font these features 1 to 3 are different in accordance to the different fonts, even with the character "3". Those features 1 to 3 in accordance with the prior art as used in the IBM document readers 3890, 3891 and 3892, are designed manually as far as shape is concerned and also as far as the selection which feature to take is concerned.

Also for a better understanding, the known linear decision process is described in connection with the feature vector including the features # 1, # 2 and # 3 as shown in Fig. 1. The feature vector has the binary form 1101 including the features numbers or measurements # 1, # 2 and # 3 (wherein a 0 in the feature vector means a miss and a 1 means a hit). Out of these feature vectors a product is built in the coefficient storage 21 which is associated to the different feature numbers in the columns and to the different classes 0, 1, 2 and 3 as indicated in box 22 in the different rows. In the box 23 the result of the class sum is shown. For example the sum for the class 0 is generated by adding the numbers -5, -20 and -50 of the first row as those feature or measurements where present in the feature vector whereas feature # 2 is missed and hence the class 80 coefficient. This is done for all classes and as shown the highest result 182 is given for the class 3 and the next highest sum 39 is given for the number "2". This is indicated in the candidate table 24. In the comparison step 25 the highest class sum 182 is compared with the next highest class sum 39 against a constant value. If the difference is greater than a constant representing a confidence level, then this class associated with this sum is taken. Thus, in the decision box 26 the decision is indicated that the sum 182 pertains to the # "3". So in the linear decision process that character class having the highest class sum is taken if the highest class sum diminished by the next highest class sum is greater than a constant confidence level.

Generally speaking the basic idea of the present invention is the utilization of pieces of sample patterns which do not cover the areas of the master characters or pattern. This is done beside using pieces which cover a master and sample pattern or character respectively. By using pieces of the sample pattern which do not cover areas of the master character, the probability is decreased of an assignment to a master character which does not have matching character pieces in this area.

A decisive factor and advantage of the present invention is that the features used for the classification are not designed manually as in the prior art described above but are the result of an automatic training process. Thus, the implementation of the feature from generation is much faster and less expensive then in the traditional process. Tests have shown that the improvement is in the range of 60 : 1. In the training process in accordance with the present invention not only the matching character pieces are weighted and provided with weighting factors but also not matching character pieces of the training sample pattern are provided with weights. The result of that are negative and positive feature vectors. This increases the information distance between the classes drastically and thus the recognition process is faster, more effective and much more reliable.

As in accordance with the present invention matching and non-matching pieces of a mask and a sample pattern are considered in the recognition process, there has to be fulfilled one prerequisite which are normalized, well aligned character pattern.

In the implementation this prerequisite of normalized well aligned character pattern can be achieved by the following steps:

1. Capturing the image of the text in a sufficient number of grey levels, for example 256.
2. Preprocessing the image by

    a) intelligent clipping with, for example a dynamic clipping algorithm, to to get a black/white image,
    b) cleaning of the background around the character area to remove dirt.

3. Extracting the text lines to be recognized.
4. Segmentation of the print line into characters or pattern respectively.
5. Character-normalization by for example:

    a) slant correction of each character, thus normalizing of the character angle,
    b) normalization of the stroke width, i. e. expanding or compressing by arithmetic image processing methods the width of the character strokes,
    c) normalization of the size, i. e. scaling the height and width of a character by means of arithmetic image processing methods, so that a standard size is always achieved. This standard size is optional but has to be fixed and equal for the training and recognition part.

6. Alignment of the character or pattern respectively, i. e. the digitized character or pattern have to be aligned in a two-dimensional recognition pattern matrix. The size of this matrix is optional but has to be fixed and equal for the training and recognition part.

If the normalization process takes place, also capital handprint characters and/or numbers can be processed by this invention. For the generation of the feature masks a further prerequisite is the existence of a sufficient set of training samples of the character font or the set of pattern to be recognized. The shape of the characters of a font are represented by a training deck with the images of all characters of the font. This must include bad, normal and good samples, i. e. high as well as low quality characters and it has to be representative. The result of the training phase is the classification of a given font into character classes or more generally speaking the classification of a given set of pattern into the pattern classes.

In accordance with a preferred embodiment of the present invention the implementation is performed in different steps. The step 1 can be called the generation of ideal masks $K_i$.

For each of the n character classes i of a font a binary ideal mask $K_i$ with i = 1, 2, ... n and with K $\varepsilon$ {$K_1$, $K_2$, ... $K_n$} is calculated. The basis for this calculation are the normalized binary character images of the representative training deck which consists of $m_i$ with i = 1, 2, ... n characters for each of the n character classes.

The ideal mask $K_i$ is built by adding up all $m_i$ character masks of a character class i on a pixel basis. $n_i$ is the number of characters of the class i. The result of this adding up is a pattern matrix with values between 0 and $m_i$ for each pixel dependent on the frequency of pixels in a certain position in all the character pattern. To get a binary pattern the resulting matrix is clipped by a value C with

$$0 \leq C \leq m_i.$$

Thus, again a black/white binary pattern representation is generated. The value of $C = a_o \times m_i$. The value of $a_o$ is in the range of 0.5 to 0.8 for practical cases. It is depending on the scanning device. All pixel values > C are set to 1, else to 0.

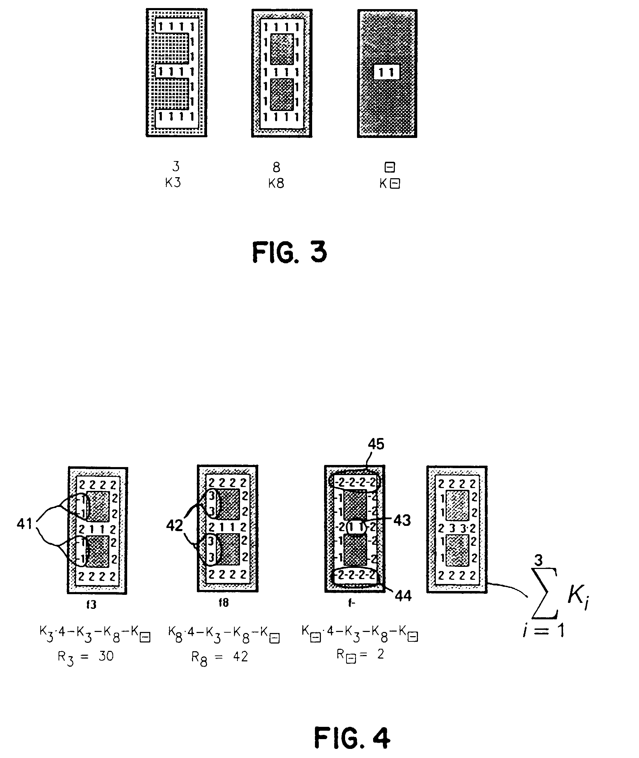

In Fig. 3 there is shown an example of such an ideal mask for a given font with only three characters of the classes "3", "8" and "-". These ideal masks K3, K8 and K- are represented by pixel values 1 in the positions occupied by the ideal mask. They are shown to be within a normalized frame thus having size and form which is the basis for the later recognition phase. The ideal mask K3 for the character 3 is indicated by a 1 schematically at each position where this font requires to be one of the three. The same is true for the ideal mask K8 for the character 8 and for the ideal K- for the symbol "-".

The next step in accordance with the present invention is the feature mask initialization process in which the feature classes $f_i$ are calculated. For this calculation of the feature classes $f_i$ each ideal mask $K_i$ of the class or mask respectively i in the font is multiplied by (n + 1), the number of characters in the font +1. From the result of this multiplication the sum of all n existing ideal masks is subtracted. The calculation is performed on a pixel basis in the character matrix and the result is the feature class $f_i$ for the character or pattern i. This follows the formula:

$$f_i = (n+1) \times K_i - \sum_{i=1}^{n} K_i.$$

In Fig. 4 there are shown examples of feature masks f3, f8 and f-. Besides these three features is shown the sum of the three existing ideal character masks K3, K8 and K-. If, for example, the feature mask for the character 3 has to be calculated, the pixel mask values in the ideal mask K3 shown in Fig. 3 is multiplied by four and from the result the sum shown in Fig. 4 on the right hand is subtracted. The result is shown as f3 in the left hand part of Fig. 4. The same scheme is applied for calculating the feature masks f8 and f- shown Fig. 4.

As furthermore depicted in Fig. 4 in the feature mask f3 there exist two areas 41 in which the indicated values are -1. In all the other areas of the feature class f3 the values are 1 or either 2. The positive values can be seen to be zonal features and the negative values can be seen to be the anti-features in accordance with the present invention. Their weight, negative as indicated in the figure, is extremely helpful in distinguishing this feature mask f3, for example from the feature mask f8. There we have in the same position areas 42, as indicated by character 3 increased positive zonal features for the character 8 in this area 42. The contribution on the anti-features in accordance with the present invention can be seen very clearly in the feature mask f- where only the area 43 contains positive values, indicated by character. All other values in the form of the "8" are either -1 or -2 values, thus indicating that in these areas there exists strong anti-features in other areas like the area 44 or 45.

During the step of feature class initialization there has to be calculated also a normalization factor R. This normalization factor R is the total of all pixel values of a matrix which is the result of the multiplication of $f_i \times K_i$ with v columns and u rows. This is given by the formula:

$$R_i = \sum_{u} \sum_{v} (f_i \times K_i)_{u,v}.$$

The values for the different normalization factors associated to the feature classes f3, f8 and f- are indicated as $R_3 = 30$, $R_8 = 42$ and $R_- = 2$ in Fig. 4 beneath the associated feature masks.

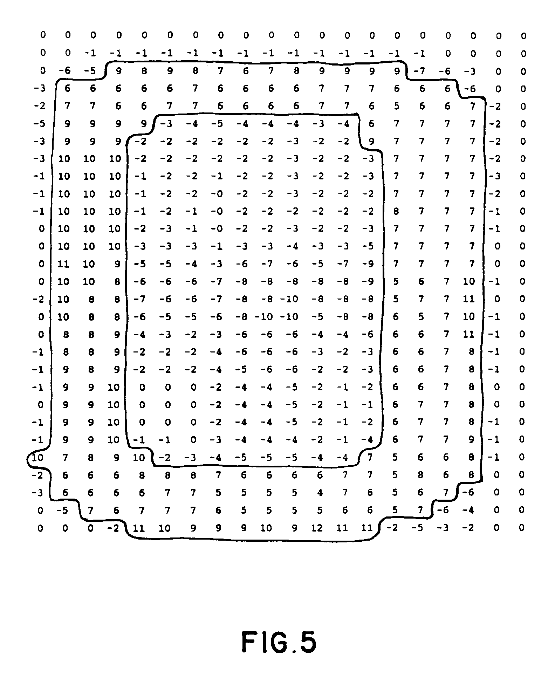

In Fig. 5 there is shown an example for a feature mask for the character 0 of the OCR A font. Within the lines there are shown different positive weight factors. Outside the 0 and within the 0 there are shown areas with 0 weight factors and negative weight factors. There are zones having high weight factors, high positive as well as high negative weight factors. The example shown in Fig. 5 shows a real life example of a feature mask. It was the result of a training run with a life data training deck. The shown weight factors, indicated by the numbers in the matrix are the numbers with which the pixels will be multiplied in the recognition phase.

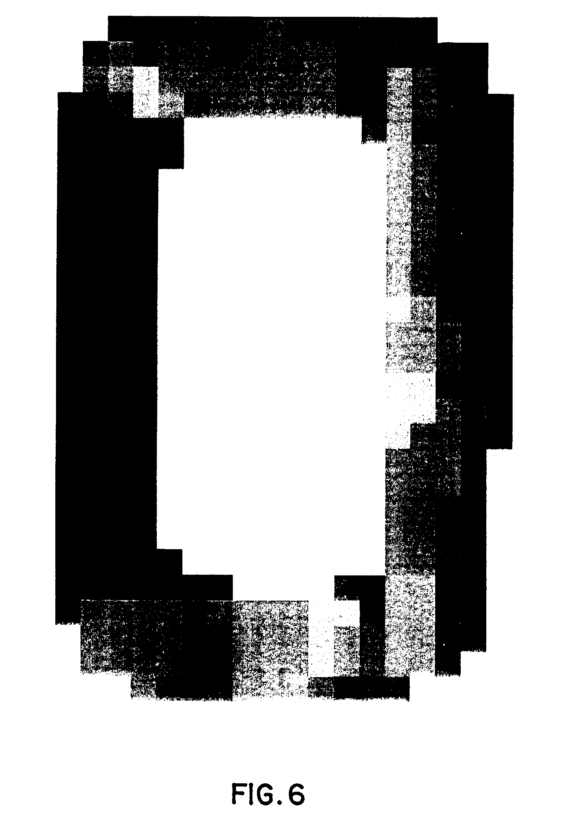

In Fig. 6 there is shown a slightly different illustration of what is shown in Fig. 5. The different zones having different positive weight factors of a 0 are shown by different grey levels. As darker the grey level is, as higher the positive weight factor is.

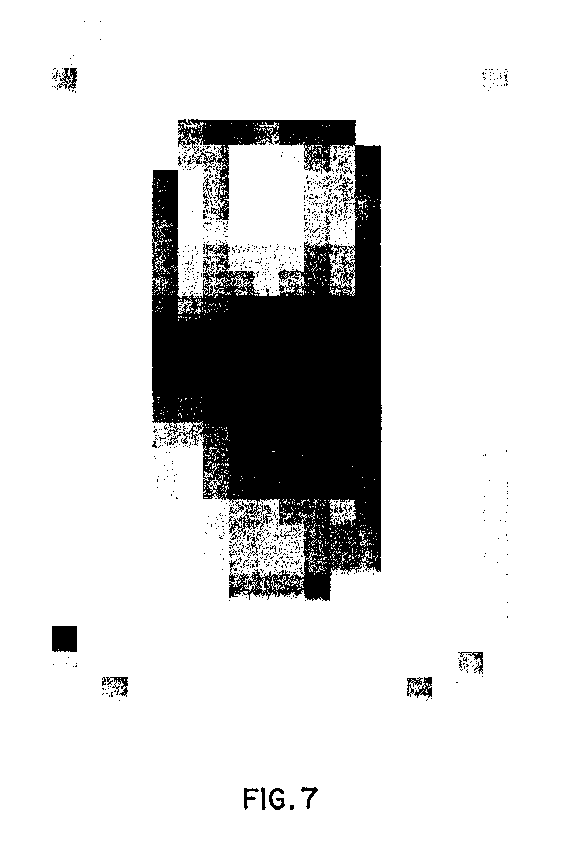

In Fig. 7 there is indicated the weight factors of the anti-feature of the 0. Also here the importance of the weight factor is indicated by the grey level. It can be seen that as higher the negative weight factor is, as darker is the representation in Fig. 7.

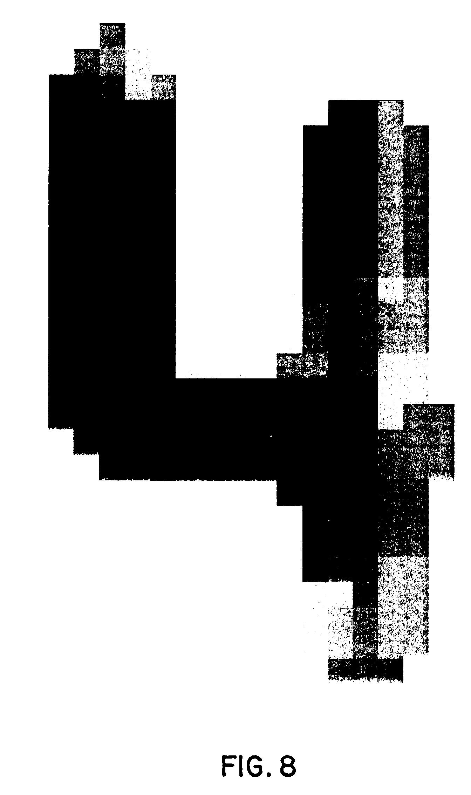

For demonstration purposes in Fig. 8 the same scheme is used to show the different positive weight factors in the feature mask of the character 4. There also the darkest areas indicate the most important or highest respectively zonal weight factors.

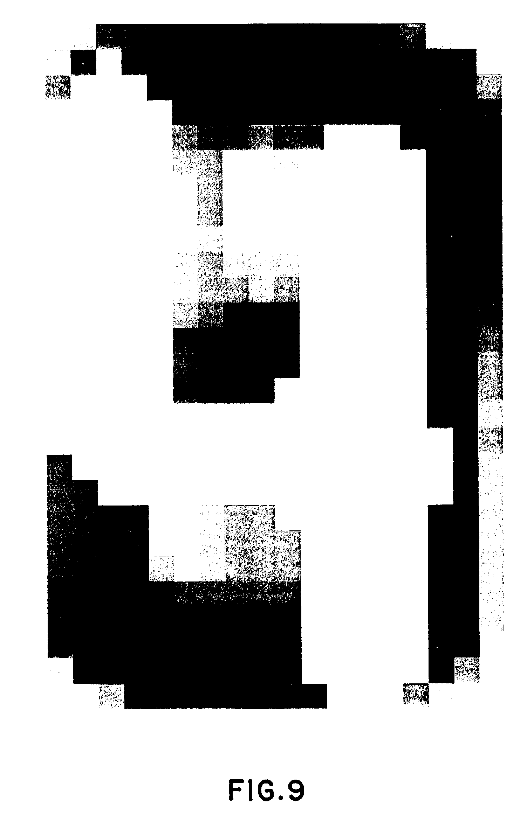

In Fig. 9 the negative values are indicated in accordance with the same scheme, representing the anti-features.

Until now the most important aspect of the invention has been described having the advantage that the invention provides an automatic feature generation process as a result of the described new learning or training processes respectively combined with intelligent features with negative and positive values increasing the information distance. These intelligent features will support zonal features and anti-features.

Finally the recognition process should be briefly discussed. During the recognition phase sample character image pattern, as result of a scanning and normalization process, will be classified. That means that every character image will be assigned to a mask or class in a font of standard characters, i. e. OCR A. A prerequisite for this method is that the normalization process of the sample pattern after scanning is equal to the normalization which took place in the training phase. This is clear as a pixel by pixel comparison and multiplication has to be performed and the areas to be compared have to be congruent.

During recognition each sample character matrix $S_k$, with k being the sample sequence number, is multiplied with all feature masks or classes $f_i$ of the mask or class i of the font, divided by the normalization factor $R_i$. The result is the determination value $D_i$. This follows the formula:

$$D_i = S_k \times \frac{f_i}{R_i}.$$

The maximum value of $D_i$ is 1, but is normally lower than 1 and even negative. Only perfect sample characters show a determination value D of approximately 1. The decision which character class or mask is closest to the sample character image depends now on the value of D. The class with the maximum $D_i$ is taken as the most likelihood character or pattern in the font. That means S is recognized as class or character i if:

$$i \rightarrow S \text{ if } D_i = \max.$$

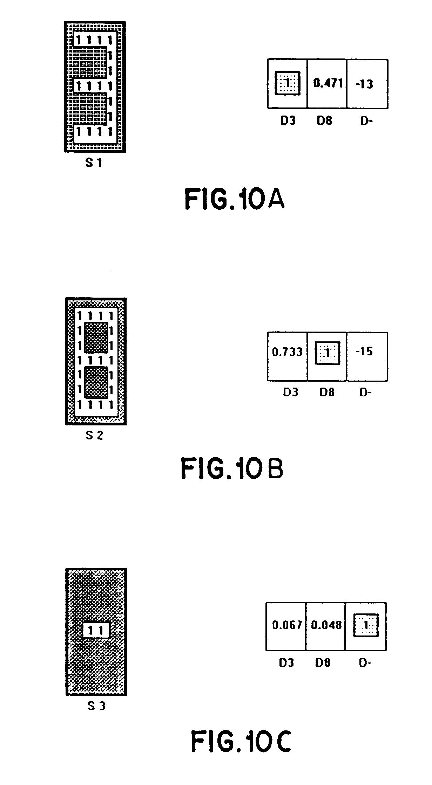

In Fig. 10 there are shown examples for the recognition of sample character matrixes S1 in Fig. 10A, S2 in Fig. 10B and S3 in Fig. 10C. The samples shown in Fig. 10 correspond to the characters depicted in Fig. 3 and Fig. 4. In the right hand box of each figure the different determination values D3, D8 and D- are indicated in relation to the different samples. It is easy recognizable where the determination value has its maximum and thus to which character in the font the input sample pertains.

## Claims

1. A method for pattern recognition, comprising the step of:
   comparing a pattern (S1, S2, S3) with feature masks (f3, f8, f-), each of said feature masks (f3, f8, f-) representing a specific character ("3", "8", "-"),
   characterized in that

   each of said feature masks (f3, f8, f-) comprises zonal features (42, 43), representing the character itself, and anti-features (41, 44, 45), representing its background, and

   information about more than one character, namely information about all characters ("3", "8", "-") in the set of characters to be recognised, is utilized for the generation of said zonal features (42, 43) and anti-features (41, 44, 45) of each of said feature masks (f3, f8, f-).

2. The method for pattern recognition according to claim 1, wherein
said feature masks (f3, f8, f-) are generated comprising the steps of:

a) adding up, on a pixel basis, $m_i$ patterns, with i = 1, 2, ..., n, for each of the n character classes obtained from normalized binary pattern images of a representative training character set including bad, normal and good samples of said character,

resulting in a sum pattern mask for each of said n characters with values between 0 and $m_i$ for each pixel, representing a respective character i,

said sum pattern mask being subjected to a thresholding process using a value C to generate a black/ white binary pattern representation, whereby C is between 0 and $m_i$, setting all pixel values > C to 1, else to 0, resulting for each i of said n characters in an ideal character mask $K_i$ (i = 1, 2, ..., n),

b) calculating for each i of said n characters one feature mask $f_i$ (i = 1, 2, ..., n) by

multiplying, on a pixel basis, said ideal character mask $K_i$ (i = 1, 2, ..., n) by (n + 1), and

subtracting, on a pixel basis, the sum of all n existing ideal character masks $K_i$ (i = 1, 2, ..., n) (K3, K8, K-),

said calculation following the formula:

$$f_i = (n+1) \times K_i - \sum_{i=1}^{n} K_i.$$

3. The method for pattern recognition according to claim 2, wherein
said generation of feature masks (f3, f8, f-) is performed automatically, particularly is performed concurrently with normal pattern recognition operation.

4. The method for pattern recognition according to claim 2 or 3, further comprising the step of:

calculating a normalization factor $R_i$ (i = 1, 2, ..., n) for each i of said n characters,

said normalization factor $R_i$ (R3, R8, R-) being the sum of all pixel values of a matrix,

said matrix being the result of a multiplication, on a pixel basis, of $f_i \times K_i$ with v columns and u rows,

said calculation following the formula:

$$R_i = \sum_{u} \sum_{v} (f_i \times K_i)_{u,v}.$$

5. The method for pattern recognition according to claim 4, further comprising the step of:

multiplying, on a pixel basis, each sample pattern image matrix $S_k$ (S1, S2, 53) with all feature masks $f_i$ (f3, f8, f-) divided by said corresponding normalization factor $R_i$ (R3, R8, R-),

resulting in a determination value $D_i$ (i = 1, 2, ..., n) for each i of said n characters corresponding to said sample pattern image matrix $S_k$ (S1, S2, S3), wherein

said sample pattern image matrix $S_k$ (S1, S2, S3) is normalized after scanning in equal manner as said binary pattern images of said representative training character set during training and generating phase, and

k is a sample sequence number,

said multiplication following the formula:

$$D_i = S_k \times \frac{f_i}{R_i}.$$

6. The method for pattern recognition according to claim 5, wherein
said determination value $D_i$ (D3, D8, D-) has an absolute maximum value of "1", said absolute maximum value "1" being associated to a perfect sample pattern, whereas normally said determination value $D_i$ being lower than "1" or even negative.

7. The method for pattern recognition according to claim 5 or 6, wherein
deciding which character is closest to said sample pattern image matrix $S_k$ (S1, S2, S3) is made dependent on said value of $D_i$ (D3, D8, D-), whereby

character i, corresponding to feature mask $f_i$ having a relative maximum value $D_{i,(max, rel)}$ within i = 1, 2, ..., n, is taken as the most likely character,

i. e., $S_k$ (S1, S2, S3) is recognized as character i ("3", "8", "-"), respectively if:

$$i \rightarrow S_k \text{ if } D_i = S_k \times f_i/R_i$$

has a relative maximum $D_{i,(max, rel)}$ within i = 1, 2, ..., n.

8. The method for pattern recognition according to any one of the preceding claims, wherein

said patterns are characters and/or numbers and

said patterns are part of a font and said font is preferably a standarized font and/or an image pattern as logos, pictograms and textures.

9. The method for pattern recognition according to any one of the preceding claims, wherein
said patterns are normalized capital handprint characters and/or numbers.

10. A system for pattern recognition, comprising:
means for comparing a pattern (S1, S2, S3) with feature masks (f3, f8, f-), each of said feature masks (f3, f8, f-) representing a specific character ("3", "8", "-"),
characterized in that

each of said feature masks (f3, f8, f-) comprises zonal features (42, 43), representing the character itself, and anti-features (41, 44, 45), representing its background, and

said system for pattern recognition further comprises means for generating said zonal features (42, 43) and anti-features (41, 44, 45) of said feature masks (f3, f8, f-), which utilize information about more than one character, namely information about all characters ("3", "8", "-") in the set of characters to be recognised, for the generation of each of said feature masks (f3, f8, f-).

11. The system for pattern recognition according to claim 10, wherein
said means for generating said feature masks (f3, f8, f-) comprise:

a) means for adding up, on a pixel basis, $m_i$ patterns, with i = 1, 2, ..., n, for each of the n character classes obtained from normalized binary pattern images of a representative training character set including bad, normal and good samples of said character,

resulting in a sum pattern mask for each of said n characters with values between 0 and $m_i$ for each pixel, representing a respective character i,

said sum pattern mask being subjected to a thresholding process using a value C to generate a black/white binary pattern representation, whereby C is between 0 and $m_i$, setting all pixel values > C to 1, else to 0, resulting for each i of said n characters in an ideal character mask $K_i$ (i = 1, 2, ..., n),

b) means for calculating for each i of said n characters one feature mask $f_i$ (i = 1, 2, ..., n), including:

means for multiplying, on a pixel basis, said ideal character mask $K_i$ (i = 1, 2, ..., n) by (n + 1), and

means for subtracting, on a pixel basis, the sum of all n existing ideal character masks $K_i$ (i = 1, 2, ..., n) (K3, K8, K-),

said calculation following the formula:

$$f_i = (n+1) \times K_i - \sum_{i=1}^{n} K_i.$$

12. The system for pattern recognition according to claim 11, wherein said generation of feature masks (f3, f8, f-) is performed automatically, particularly is performed concurrently with normal pattern recognition operation.

13. The system for pattern recognition according to claim 11 or 12, further comprising: means for calculating a normalization factor $R_i$ (i = 1, 2, ..., n) for each i of said n characters,

said normalization factor $R_i$ (R3, R8, R-) being the sum of all pixel values of a matrix,

said matrix being the result of a multiplication, on a pixel basis, of $f_i \times K_i$ with v columns and u rows,

said calculation following the formula:

$$R_i = \sum_{u} \sum_{v} (f_i \times K_i)_{u,v}.$$

14. The system for pattern recognition according to claim 13, further comprising:

means for multiplying, on a pixel basis, each sample pattern image matrix $S_k$ (S1, 52, S3) with all feature masks $f_i$ (f3, f8, f-) divided by said corresponding normalization factor $R_i$ (R3, R8, R-),

resulting in a determination value $D_i$ (i = 1, 2, ..., n) for each i of said n characters corresponding to said sample pattern image matrix $S_k$ (S1, S2, S3), wherein

said sample pattern image matrix $S_k$ (S1, S2, S3) is normalized after scanning in equal manner as said binary pattern images of said representative training character set during training and generating phase, and

k is a sample sequence number,

said multiplication following the formula:

$$D_i = S_k \times \frac{f_i}{R_i}.$$

**15.** The system for pattern recognition according to claim 14, wherein
said determination value $D_i$ (D3, D8, D-) has an absolute maximum value of "1", said absolute maximum value "1" being associated to a perfect sample pattern, whereas normally said determination value $D_i$ being lower than "1" or even negative.

**16.** The system for pattern recognition according to claim 14 or 15, having
means for deciding which character is closest to said sample pattern image matrix $S_k$ (S1, S2, S3), said decision being made dependent on said value of $D_i$ (D3, D8, D-), whereby

character i, corresponding to feature mask $f_i$ having a relative maximum value $D_{i,(max,\ rel)}$ within i = 1, 2, ..., n, is taken as the most likelihood character,

i. e., $S_k$ (S1, S2, S3) is recognized as character i ("3", "8", "-"), respectively if:

$$i \rightarrow S_k \text{ if } D_i = S_k \times f_i/R_i$$

has a relative maximum $D_{i,(max,\ rel)}$ within i = 1, 2, ..., n,

**17.** The system for pattern recognition according to any one of claims 10 to 16, wherein

said patterns are characters and/or numbers and

said patterns are part of a font and said font is preferably a standardized font and/or an image pattern as logos, pictograms and textures.

**18.** The system for pattern recognition according to any one of claims 10 to 17, wherein
said patterns are normalized capital handprint characters and/or numbers.

**19.** The system for pattern recognition according to any one of claims 10 to 18, wherein
a neural network is used for generating ideal character masks $K_i$ (K3, K8, K-) as well as for calculating said feature masks $f_i$ (f3, f8, f-).

## Patentansprüche

**1.** Ein Verfahren zur Mustererkennung, folgenden Schritt umfassend:
Vergleichen eines Musters (S1, S2, S3) mit Merkmalsmasken (f3, f8, f-), wobei jede der genannten Merkmalsmasken (f3, f8, f-) ein bestimmtes Zeichen darstellt ("3", "8", "-"), dadurch gekennzeichnet, daß

jede der genannten Merkmalsmasken (f3, f8, f-) zonenweise Merkmale umfaßt (42, 43), die das Zeichen selbst darstellen, und Anti-Merkmale (41, 44, 45), die seinen Hintergrund darstellen, und

die Information über mehr als ein Zeichen, nämlich die Information über alle Zeichen ("3", "8", "-") in dem zu erkennenden Zeichensatz, verwendet wird zur Erzeugung der genannten zonenweisen Merkmale (42, 43) und Anti-Merkmale (41, 44, 45) jeder der genannten Merkmalsmasken (f3, f8, f-).

**2.** Das Verfahren zur Mustererkennung nach Anspruch 1, bei dem
die genannten Merkmalsmasken (f3, f8, f-) erzeugt werden durch die folgenden Schritte:

a) Addieren, auf Pixelbasis, von $m_i$ Mustern, mit i = 1, 2, ..., n, für jede der n Zeichenklassen, die man aus normalisierten, binären Musterbildern eines repräsentativen Schulungszeichensatzes erhält, enthaltend schlechte, normale und gute Abtastwerte des genannten Zeichens,

woraus sich eine Summenmustermaske für jedes der genannten n Zeichen mit Werten zwischen 0 und $m_i$ für jedes Pixel ergibt, die das entsprechende Zeichen i darstellt,

wobei die genannte Summenmustermaske einem Schwellenbildungsprozeß unterzogen wird, unter Verwendung des Werts C zur Erzeugung einer Schwarz/Weiß-Binärmusterdarstellung, wodurch C zwischen 0 und $m_i$ liegt, wobei alle Pixelwerte > C auf 1, sonst auf 0 gesetzt werden, woraus sich für jedes i der genannten n Zeichen eine ideale Zeichenmaske $K_i$ (i = 1, 2, ..., n) ergibt,

b) für jedes i der genannten n Zeichen, Berechnen einer Merkmalsmaske $f_i$ (i = 1, 2, ..., n) durch

Multiplizieren, auf Pixelbasis, der genannten idealen Zeichenmaske $K_i$ (i = 1, 2, ..., n) mit (n + 1), und

Subtrahieren, auf Pixelbasis, der Summe aller n vorhandenen idealen Zeichenmasken $K_i$ (i = 1, 2, ..., n) (K3, K8, K-),

wobei die genannte Berechnung sich nach der folgenden Formel richtet:

$$f_i = (n+1) \times K_i - \sum_{i=1}^{n} K_i$$

3. Das Verfahren zur Mustererkennung nach Anspruch 2, bei dem die genannte Erzeugung der Merkmalsmasken (f3, f8, f-) automatisch ausgeführt wird, insbesondere ausgeführt wird gleichzeitig mit dem normalen Mustererkennungsvorgang.

4. Das Verfahren zur Mustererkennung nach Anspruch 2 oder 3, weiter umfassend den folgenden Schritt:

Berechnen eines Normalisierungsfaktors $R_i$ (i = 1, 2, ..., n) für jedes i der genannten n Zeichen,

wobei der genannte Normalisierungsfaktor $R_i$ (R3, R8, R-) die Summe aller Pixelwerte einer Matrix ist,

wobei die genannte Matrix das Ergebnis einer Multiplikation, auf Pixelbasis, von $f_i \times K_i$ mit v Spalten und u Reihen ist,

wobei die genannte Berechnung sich nach der folgenden Formel richtet:

$$R_i = \sum_u \sum_v (f_i \times K_i)_{u,v} \quad .$$

5. Das Verfahren zur Mustererkennung nach Anspruch 4, weiter folgenden Schritt umfassend:

Multiplizieren, auf Pixelbasis, jeder abgetasteten Musterbildmatrix $S_k$ (S1, S2, S3) mit allen Merkmalsmasken $f_i$ (f3, f8, f-), geteilt durch den genannten entsprechenden Normalisierungsfaktor $R_i$ (R3, R8, R-),

woraus sich ein Bestimmungswert $D_i$ (i = 1, 2, ..., n) für jedes i der genannten n Zeichen ergibt, entsprechend der genannten abgetasteten Musterbildmatrix $S_k$ (S1, S2, S3), bei dem

die genannte abgetastete Musterbildmatrix $S_k$ (S1, S2, S3) normalisiert wird, nachdem in gleicher Weise wie bei den genannten binären Musterbildern des genannten repräsentativen Schulungszeichensatzes während der Schulungs- und Erzeugungsphase abgetastet wurde, und

k eine Abtastsequenzzahl ist,

wobei die genannte Multiplikation sich nach der folgenden Formel richtet:

$$D_i = S_k \times \frac{f_i}{R_i}.$$

6. Das Verfahren zur Mustererkennung nach Anspruch 5, bei dem
   der genannte Bestimmungswert $D_i$ (D3, D8, D-) einen absoluten Maximalwert von "1" hat, wobei der genannte absolute Maximalwert "1" einem perfekten Abtastmuster zugeordnet ist, während normalerweise der genannte Bestimmungswert $D_i$ unter "1" liegt oder sogar negativ ist.

7. Das Verfahren zur Mustererkennung nach Anspruch 5 oder 6, bei dem
   die Entscheidung, welches Zeichen der genannten abgetasteten Musterbildmatrix $S_k$ (S1, S2, S3) am nächsten liegt, getroffen wird in Abhängigkeit von dem genannten Wert für $D_i$ (D3, D8, D-), wodurch

   das Zeichen i, das der Merkmalsmaske $f_i$ mit einem relativen Maximalwert $D_{i,(max, rel)}$ innerhalb i = 1, 2, ..., n, entspricht, als das wahrscheinlichste Zeichen genommen wird,

   das heißt, $S_k$ (S1, S2, S3) wird jeweils als Zeichen i ("3", "8", "-")erkannt, wenn:

   $$i \rightarrow S_k, \text{ wenn } D_i = S_k \times f_i/R_i$$

   ein relatives maximales $D_{i,(max, rel)}$ innerhalb i = 1, 2, ..., n hat.

8. Das Verfahren zur Mustererkennung nach einem jeden der vorangehenden Ansprüche, bei dem

   die genannten Muster Zeichen und/oder Zahlen sind und

   die genannten Muster Teil eines Fonts sind und der genannte Font vorzugsweise ein standardisierter Font ist und/oder ein Bildmuster, beispielsweise ein Logo, ein Piktogramm oder eine Textur.

9. Das Verfahren zur Mustererkennung nach einem jeden der vorangehenden Ansprüche, bei dem
   die genannten Muster normalisierte Zeichen in Form von Handdruck-Großbuchstaben und/oder Zahlen sind.

10. Ein System zur Mustererkennung, folgendes umfassend:
    Mittel zum Vergleichen eines Musters (S1, S2, S3) mit Merkmalsmasken (f3, f8, f-), wobei jede der genannten Merkmalsmasken (f3, f8, f-) ein bestimmtes Zeichen ("3", "8", "-") darstellt,
    dadurch gekennzeichnet, daß

    jede der genannten Merkmalsmasken (f3, f8, f-) zonenweise Merkmale (42, 43) umfaßt, die das Zeichen selbst darstellen, und Anti-Merkmale (41, 44, 45), die seinen Hintergrund darstellen, und

    das genannte System zur Mustererkennung weiter Mittel umfaßt zur Erzeugung der genannten zonenweisen Merkmale (42, 43) und Anti-Merkmale (41, 44, 45) der genannten Merkmalsmasken (f3, f8, f-), die Informationen über mehr als ein Zeichen verwenden, nämlich Informationen über alle Zeichen ("3", "8", "-") in der Gruppe der zu erkennenden Zeichen, zur Erzeugung jeder der genannten Merkmalsmasken (f3, f8, f-).

11. Das System zur Mustererkennung nach Anspruch 10, bei dem
    die genannten Mittel zur Erzeugung der genannten Merkmalsmasken (f3, f8, f-) folgendes umfassen:

    a) Mittel zum Addieren, auf Pixelbasis, von Mustern, mit i = 1, 2, ..., n, für jede der n Zeichenklassen, die man aus den normalisierten binären Musterbildern eines repräsentativen Schulungszeichensatzes erhalten hat, enthaltend schlechte, normale und gute Abtastwerte der genannten Zeichen,

    woraus sich eine Summen-Mustermaske für jedes der genannten n Zeichen ergibt, mit Werten zwischen 0 und $m_i$ für jedes Pixel, das ein entsprechendes Zeichen i darstellt,

wobei die genannte Summen-Mustermaske einem Schwellenbildungsprozeß unterzogen wird, in dem ein Wert C zur Erzeugung einer Schwarz/Weiß-Binärmusterdarstellung verwendet wird, wodurch C zwischen 0 und $m_i$ liegt, wobei alle Pixelwerte > C auf 1, sonst auf 0, gesetzt werden, woraus sich für jedes i der genannten n Zeichen eine ideale Zeichenmaske $K_i$ (i = 1, 2, ..., n) ergibt,

b) Mittel zum Berechnen einer Merkmalsmaske $f_i$ (i = 1, 2, ..., n) für jedes i der genannten n Zeichen, umfassend:

Mittel zur Multiplikation, auf Pixelbasis, der genannten idealen Zeichenmaske $K_i$ (i = 1, 2, ..., n) mit (n + 1), und

Mittel zum Subtrahieren, auf Pixelbasis, der Summe aller n vorhandenen idealen Zeichenmasken $K_i$ (i = 1, 2, ..., n) (K3, K8, K-),

wobei die genannte Berechnung sich nach der folgenden Formel richtet:

$$f_i = (n+1) \times K_i - \sum_{i=1}^{n} K_i \quad .$$

12. Das System zur Mustererkennung nach Anspruch 11, bei dem
die genannte Erzeugung von Merkmalsmasken (f3, f8, f-) automatisch ausgeführt wird, insbesondere ausgeführt wird gleichzeitig mit dem normalen Mustererkennungsvorgang.

13. Das System zur Mustererkennung nach Anspruch 11 oder 12, weiter umfassend:
Mittel zur Berechnung eines Normalisierungsfaktors $R_i$ (i = 1, 2, ..., n) für jedes i der genannten n Zeichen,

wobei der genannte Normalisierungsfaktor $R_i$ (R3, R8, R-) die Summe aller Pixelwerte einer Matrix ist,

wobei die genannte Matrix das Ergebnis einer Multiplikation, auf Pixelbasis, von $f_i \times K_i$ mit v Spalten und u Reihen ist,

wobei die genannte Berechnung sich nach der folgenden Formel richtet:

$$R_i = \sum_u \sum_v (f_i \times K_i)_{u,v} \quad .$$

14. Das System zur Mustererkennung nach Anspruch 13, weiter folgendes umfassend:

Mittel zur Multiplikation, auf Pixelbasis, jeder abgetasteten Musterbildmatrix $S_k$ (S1, S2, S3) mit allen Merkmalsmasken $f_i$ (f3, f8, f-), geteilt durch den genannten entsprechenden Normalisierungsfaktor $R_i$ (R3, R8, R-),

woraus sich ein Bestimmungswert $D_i$ (i = 1, 2, ..., n) für jedes i der genannten n Zeichen ergibt, entsprechend der genannten abgetasteten Musterbildmatrix $S_k$ (S1, S2, S3), bei dem

die genannte abgetastete Musterbildmatrix $S_k$ (S1, S2, S3) normalisiert wird, nachdem in gleicher Weise wie bei den genannten Binärmusterbildern des genannten repräsentativen Schulungszeichensatzes während der Schulungs- und Erzeugungsphase abgetastet wurde, und

k eine Abtastsequenzzahl ist,

wobei die genannte Multiplikation sich nach der folgenden Formel richtet:

$$D_i = S_k \times \frac{f_i}{R_i}.$$

**15.** Das System zur Mustererkennung nach Anspruch 14, bei dem
der genannte Bestimmungswert $D_i$ (D3, D8, D-) einen absoluten Maximalwert von "1" hat, wobei der genannte absolute Maximalwert "1" einem perfekten Abtastmuster zugeordnet wird, während normalerweise der genannte Bestimmungswert $D_i$ unter "1" liegt oder sogar negativ ist.

**16.** Das System zur Mustererkennung nach Anspruch 14 oder 15, umfassend
Mittel, um zu entscheiden, welches Zeichen der genannten abgetasteten Musterbildmatrix $S_k$ (S1, S2, S3) am nächsten liegt, wobei diese Entscheidung getroffen wird abhängig von dem genannten Wert für $D_i$ (D3, D8, D-), wodurch

das Zeichen i, entsprechend der Merkmalsmaske $f_i$ mit einem relativen Maximalwert $D_{i,(max, rel)}$ innerhalb i = 1, 2, ..., n, als das wahrscheinlichste Zeichen genommen wird,

das heißt, $S_k$ (S1, S2, S3) wird jeweils als Zeichen i ("3", "8", "-") erkannt, wenn:

$$i \rightarrow S_k, \text{ wenn } D_i = S_k \times f_i/R_i$$

ein relatives maximales $D_{i,(max, rel)}$ innerhalb i = 1, 2, ..., n hat.

**17.** Das System zur Mustererkennung nach einem jeden der Ansprüche 10 bis 16, bei dem

die genannten Muster Zeichen und/oder Zahlen sind und

die genannten Muster Teil eines Fonts sind und der genannte Font vorzugsweise ein standardisierter Font und/oder ein Bildmuster ist, beispielsweise ein Logo, ein Piktogramm oder eine Textur.

**18.** Das System zur Mustererkennung nach einem jeden der Ansprüche 10 bis 17, bei dem
die genannten Muster normalisierte Zeichen in Form von Handdruck-Großbuchstaben und/oder Zahlen sind.

**19.** Das System zur Mustererkennung nach einem jeden der Ansprüche 10 bis 18, bei dem
ein neuronales Netz verwendet wird zur Erzeugung idealer Zeichenmasken $K_i$ (K3, K8, K-) sowie zur Berechnung der genannten Merkmalsmasken $f_i$ (f3, f8, f-).

**Revendications**

**1.** Procédé de reconnaissance de formes, comprenant les phases qui consistent à:
comparer une forme (S1, S2, S3) à des masques de caractéristiques (f3, f8, f-), chacun des dits masques de caractéristiques (f3, f8, f-) représentant un caractère spécifique ("3 ", "8", "-"),
caractérisé en ce que

chacun des dits masques de caractéristiques (f3, f8, f-) comprend des caractéristiques zonales (42, 43) représentant le caractère lui-même et des anti-caractéristiques (41, 44, 45) représentant le fond, et

l'information relative à plus d'un caractère, c'est-à-dire l'information relative à tous les caractères ("3", "8", "-") dans le jeu de caractères à reconnaître, est utilisée pour la génération des dites caractéristiques zonales (42, 43) et anti-caractéristiques (41, 44, 45) de chacun des dits masques de caractéristiques (f3, f8, f-).

**2.** Procédé de reconnaissance de formes selon la revendication 1, où
la génération des dits masques de caractéristiques (f3, f8, f-) comprend les phases suivantes:

a) ajouter, en se basant sur une base de pixels, $m_i$ formes, avec i = 1, 2, ..., n, pour chacune des classes des n caractères obtenues à partir des images des formes binaires normalisées d'un jeu de caractères d'entraînement représentatif comprenant des échantillons mauvais, normaux et bons du dit caractère,

résultant en un masque de la forme née de la somme des formes pour chacun des dits n caractères avec des valeurs comprises entre 0 et $m_i$ pour chaque pixel, représentant un caractère respectif i,

ledit un masque de la somme des formes étant soumis à un seuillage qui utilise une valeur C pour générer une représentation en noir et blanc de la forme binaire, par quoi C est compris entre 0 et $m_i$ ce qui porte toutes les valeurs des pixels > C à 1, ou alors à 0, résultant pour tout i des dits n caractères en un masque de caractère idéal $k_i$ (i = 1, 2 n),

b) calculer pour chaque i des dits n caractères, un masque des caractéristiques $f_i$ (i = 1, 2, ..., n) en

multipliant, sur une base de pixels, ledit masque idéal de caractère $K_i$ (i = 1, 2 n) par (n + 1), et

soustrayant, sur une base de pixels, la somme de tous les n masques idéaux de caractère existants $K_i$ (i = 1, 2 n) (K3, K8, K-),

ledit calcul suivant la formule:

$$f_i = (n + 1) \times K_i - \sum_{i-1}^{n} K_i$$

3. Procédé pour la reconnaissance de formes selon la revendication 2, où ladite génération des masques de caractéristiques (f3, f8, f-) est exécutée automatiquement, et est en particulier exécutée en même temps qu'une opération normale de reconnaissance des formes.

4. Procédé de reconnaissance de formes selon la revendication 2 ou 3, comprenant en outre les phases qui consistent à:

calculer un facteur de normalisation $R_i$ (i = 1, 2 n) pour chaque i des dits n caractères,

ledit facteur de normalisation $R_i$ (R3, R8, R-) étant la somme de toutes les valeurs des pixels d'une matrice,

ladite matrice étant le résultat d'une multiplication, sur une base de pixel, de $f_i \times K_i$ avec v colonnes et u rangs,

ledit calcul suivant la formule:

$$R_i = \sum_{u} \sum_{v} (f_i \times K_i)_{u,v}$$

5. Procédé de reconnaissance des formes selon la revendication 4, comprenant en outre les phases suivantes:

multiplier, sur une base de pixels, chaque matrice d'échantillons de formes $S_i$ (S1, S2, S3) par les masques de caractéristiques $f_i$ (f3, f8, f-) divisés par leur dit facteur de normalisation correspondant $R_i$ (R3, R8, R-),

ce qui donne une valeur de détermination $D_i$ (i = 1, 2 n) pour chaque i des dits n caractères correspondant à ladite matrice d'échantillons de formes $S_k$ (S1, S2, S3), où

ladite matrice d'échantillons de formes $S_k$ (S1, S2, S3) est normalisée après un balayage, de la même manière que le sont les images binaires des formes du dit jeu de caractères d'entraînement représentatif lors de la phase d'entraînement et de génération, et

k est un numéro d'ordre d'échantillon,

ladite multiplication suit la formule:

$$D_i = S_k \times \frac{f_i}{R_i}$$

6. Procédé de reconnaissance de formes selon la revendication 5, où
ladite valeur de détermination $D_i$ (D3, D8, D-) a une valeur absolue maximale de "1", ladite valeur absolue maximale "1" étant associée à une forme d'échantillon parfaite, alors que normalement ladite valeur de détermination $D_i$ est inférieure à "1" ou même négative.

7. Procédé de reconnaissance de formes selon la revendication 5 ou 6, où
la décision qui indique quel est le caractère qui est le plus proche de ladite matrice d'échantillons de fontes $S_k$ (S1, S2, S3) dépend de ladite valeur de $D_i$ (D3, D8, D-), par quoi

le caractère i, correspondant au masque de caractéristiques $f_i$ ayant une valeur relative maximale $D_{i(max, rel)}$ pour i = 1, 2,..., n, est choisi comme étant le caractère le plus probable,

c-à-d, $S_k$ (S1, S2, S3) est reconnu en tant que caractère i ("3", "8", "-"), respectivement, si:

$$i \to S_k \text{ si } D_i = S_k \times f_i/R_i$$

a une valeur relative maximale $D_{i(max, rel)}$ dans i = 1,2, ..., n.

8. Procédé de reconnaissance de formes selon l'une quelconque des revendications précédentes, où

les dites formes sont des caractères et/ou des chiffres et

les dites formes font partie d'une police de caractères et ladite police est de préférence une police normalisée et/ou une image comme des logos, des pictogrammes et des textures.

9. Procédé de reconnaissance de formes selon l'une quelconque des revendications précédentes, où
les dites formes sont des capitales d'imprimerie normalisées et/ou des chiffres.

10. Système de reconnaissance de formes, comprenant
un moyen pour comparer une forme (S1, S2, S3) avec des masques de caractéristiques (f3, f8, f-), chacun des dits masques de caractéristiques (f3, f8, f-) représentant un caractère spécifique ("3", "8", "-"), caractérisé en ce que

chacun des dits masques de caractéristiques (f3, f8, f-) comprend des caractéristiques zonales (42, 43) représentant le caractère lui-même et des anti-caractéristiques (41, 44, 45) représentant le fond, et

l'information relative à plus d'un caractère, c'est-à-dire l'information relative à tous les caractères ("3", "8", "-") dans le jeu de caractères à reconnaître, est utilisée pour la génération des dites caractéristiques zonales (42, 43) et anti-caractéristiques (41, 44, 45) de chacun des dits masques de caractéristiques (f3, f8, f-).

11. Système pour la reconnaissance de formes selon la revendication 10, où
ledit moyen pour générer les dits masques de caractéristiques (f3, f8, f-) comprend:

a) un moyen pour additionner, en se basant sur une base de pixels, $m_i$ formes, avec i = 1, 2 n, pour chacune des classes des n caractères obtenues à partir des images normalisées des formes binaires d'un jeu de caractères d'entraînement représentatif comprenant à la fois des échantillons du dit caractère qui sont mauvais, normaux et bons,

résultant en un masque de la somme des formes pour chacun des dits n caractères, avec des valeurs comprises entre 0 et $m_i$ pour chaque pixel, représentant un caractère respectif i,

ledit masque de la forme née de la somme des formes étant soumis à une opération de seuillage qui utilise une valeur C pour générer une représentation en noir et blanc de la forme binaire, par quoi C est compris entre 0 et $m_i$ ce qui porte toutes les valeurs des pixels > C à 1, ou alors à 0, résultant pour tout i des dits n caractères en un masque de caractère idéal $K_i$ (i = 1, 2 n),

b) calculer pour chaque i des dits n caractères, un masque des caractéristiques $f_i$ (i = 1, 2 n) en

multipliant, sur une base de pixels, ledit masque de caractère idéal Ki (i = 1, 2, ..., n) par (n + 1), et

soustrayant, sur une base de pixels, la somme de tous les n masques de caractère idéaux existants $K_i$ (i = 1, 2 n) (K3, K8, K-),

ledit calcul suivant la formule:

$$f_i = (n + 1) \times K_i - \sum_{i=1}^{n} K_i$$

12. Système de reconnaissance de formes selon la revendication 11, où ladite génération des masques de caractéristiques (f3, f8, f-) est exécutée automatiquement, en particulier, elle est exécutée en même temps qu'une opération normale de reconnaissance des formes.

13. Système de reconnaissance de formes selon la revendication 11 ou 12, comprenant en outre:
un moyen pour calculer un facteur de normalisation $R_i$ (i = 1, 2, ... ,n) pour chaque i des dits n caractères,

ledit facteur de normalisation $R_i$ (R3, R8, R-) étant la somme de toutes les valeurs des pixels d'une matrice,

ladite matrice étant le résultat de la multiplication, sur une base de pixel, de $f_i$ x $K_i$ avec v colonnes et u rangs,

ledit calcul suivant la formule:

$$R_i = \sum_{u} \sum_{v} (f_i \times K_i)_{u,v}.$$

14. Système de reconnaissance des formes selon la revendication 13, comprenant en outre:

un moyen pour multiplier, sur une base de pixels, chaque matrice d'échantillon de forme $S_i$ (S1, S2, S3) par les masques de caractéristiques $f_i$ (f3, f8, f-) divisés par leur dit facteur de normalisation correspondant $R_i$ (R3, R8, R-),

ce qui donne une valeur de détermination $D_i$ (i = 1, 2, ..., n) pour chaque i des dits n caractères correspondant à ladite matrice d'échantillons de formes $S_k$ (S1, S2, S3), où

ladite matrice des échantillons de formes $S_k$ (S1, S2, S3) est normalisée après une exploration, de la même manière que les images binaires des formes du dit jeu de caractères d'entraînement représentatif lors de la phase d'entraînement et de génération, et

k est un numéro d'ordre d'échantillon,

ladite multiplication suit la formule:

$$D_i = S_k \times \frac{f_i}{R_i}$$

**15.** Système de reconnaissance de formes selon la revendication 14, où
ladite valeur de détermination $D_i$ (D3, D8, D-) a une valeur absolue maximale de "1", ladite valeur absolue maximale
"1" étant associée à une forme d'échantillon parfaite, alors que normalement ladite valeur de détermination $D_i$ est
inférieure à "1" ou même négative.

**16.** Système de reconnaissance de formes selon la revendication 14 ou 15, ayant
un moyen pour décider quel est le caractère qui est le plus proche de ladite matrice d'échantillons de formes $S_k$
(S1, S2, S3) dépend de ladite valeur de $D_i$ (D3, D8, D-), par quoi

le caractère i, correspondant au masque de caractéristiques $f_i$ ayant une valeur relative maximale $D_{i(max, rel)}$
pour i = 1, 2 n, est choisi comme étant le caractère le plus probable,

c-à-d, $S_k$ (S1, S2, S3) est reconnu en tant que caractère i ("3", "8", "-"), respectivement, si:

$$i \rightarrow S_k \text{ si } D_i = S_k \times f_i/R_i$$

a une valeur relative maximale $D_{i, (max, rel)}$ dans i = 1, 2,..., n.

**17.** Système de reconnaissance de formes selon l'une quelconque des revendications 10 à 16, où

les dites formes sont des caractères et/ou des chiffres et

les dites formes font partie d'une police de caractères et ladite police est de préférence une police normalisée
et/ou une image comme des logos, des pictogrammes et des textures.

**18.** Système de reconnaissance de formes selon l'une quelconque des revendications 10 à 17, où
les dites formes sont des capitales d'imprimerie normalisées et/ou des chiffres.

**19.** Système de reconnaissance de formes selon l'une quelconque des revendications 10 à 18, où
un réseau neural est utilisé pour générer les masques idéaux des caractères $K_i$ (K3, K8, K-) ainsi que pour calculer
les dits masques de caractéristiques $f_i$ (f3, f8, f-).

Feature Extraction

#1 upper left tip
#2 lower vertical bar
#3 lower right curve

Feature #1

Feature #2

Feature #3

# FIG.1

Feature Vector

#1  #2  #3    Feature # or measurements

| 1 | 1 | 0 | 1 |

0=miss    1=hit

| Product |

| Class | Sum | Candidate Table |

21

| -5 | -20 | +80 | -50 |
| +6 | -20 | +90 | -80 |
| -1 | +90 | +40 | -50 |
| +2 | +90 | -50 | +90 |

Coefficient
Storage

Class:
0
1
2
3

Sum:
-75
-94
39
182

22    23    Results

Candidate Table

2 next high 39

3 highest 182

24

Comparison

182 - 39
> Constant

25

Decision = 3

26

# FIG.2

3
K3

8
K8

⊟
K⊟

## FIG. 3

f3

f8

f⊟

45

43

44

$K_3 \cdot 4 - K_3 - K_8 - K_⊟$
$R_3 = 30$

$K_8 \cdot 4 - K_3 - K_8 - K_⊟$
$R_8 = 42$

$K_⊟ \cdot 4 - K_3 - K_8 - K_⊟$
$R_⊟ = 2$

$$\sum_{i=1}^{3} K_i$$

## FIG. 4

```
 0   0   0   0   0   0   0   0   0   0   0   0   0   0   0   0   0   0   0   0
 0   0  -1  -1  -1  -1  -1  -1  -1  -1  -1  -1  -1  -1  -1  -1   0   0   0   0
 0  -6  -5   9   8   9   8   7   6   7   8   9   9   9   9  -7  -6  -3   0   0
-3   6   6   6   6   6   7   6   6   6   7   7   7   6   6   6  -6   0   0
-2   7   7   6   6   7   7   6   6   6   6   7   7   6   5   6   6   7  -2   0
-5   9   9   9   9  -3  -4  -5  -4  -4  -4  -3  -4   6   7   7   7   7  -2   0
-3   9   9   9  -2  -2  -2  -2  -2  -2  -3  -2  -2   9   7   7   7   7  -2   0
-3  10  10  10  -2  -2  -2  -2  -2  -2  -3  -2  -2  -3   7   7   7   7  -2   0
-1  10  10  10  -1  -2  -2  -1  -2  -2  -3  -2  -2  -3   7   7   7   7  -3   0
-1  10  10  10  -1  -2  -2  -0  -2  -2  -3  -2  -2  -2   7   7   7   7  -2   0
-1  10  10  10  -1  -2  -1  -0  -2  -2  -2  -2  -2  -2   8   7   7   7  -1   0
 0  10  10  10  -2  -3  -1  -0  -2  -2  -3  -2  -2  -3   7   7   7   7  -1   0
 0  10  10  10  -3  -3  -3  -1  -3  -3  -4  -3  -3  -5   7   7   7   7   0   0
 0  11  10   9  -5  -5  -4  -3  -6  -7  -6  -5  -7  -9   7   7   7   7   0   0
 0  10  10   8  -6  -6  -6  -7  -8  -8  -8  -8  -8  -9   5   6   7  10  -1   0
-2  10   8   8  -7  -6  -6  -7  -8  -8 -10  -8  -8  -8   5   7   7  11   0   0
 0  10   8   8  -6  -5  -5  -6  -8 -10 -10  -5  -8  -8   6   5   7  10  -1   0
 0   8   8   9  -4  -3  -2  -3  -6  -6  -6  -4  -4  -6   6   6   7  11  -1   0
-1   8   8   9  -2  -2  -2  -4  -6  -6  -6  -3  -2  -3   6   6   7   8  -1   0
-1   9   8   9  -2  -2  -2  -4  -5  -6  -6  -2  -2  -3   6   6   7   8  -1   0
-1   9   9  10   0   0   0  -2  -4  -4  -5  -2  -1  -2   6   6   7   8   0   0
 0   9   9  10   0   0   0  -2  -4  -4  -5  -2  -1  -1   6   7   7   8   0   0
-1   9   9  10   0   0   0  -2  -4  -4  -5  -2  -1  -2   6   7   7   8  -1   0
-1   9   9  10  -1  -1   0  -3  -4  -4  -4  -2  -1  -4   6   7   7   9  -1   0
10   7   8   9  10  -2  -3  -4  -5  -5  -5  -4  -4   7   5   6   6   8  -1   0
-2   6   6   6   8   8   8   7   6   6   6   6   7   7   5   8   6   8   0   0
-3   6   6   6   6   7   7   5   5   5   5   4   7   6   5   6   7  -6   0   0
 0  -5   7   6   7   7   7   6   5   5   5   5   6   6   5   7  -6  -4   0   0
 0   0   0  -2  11  10   9   9   9  10   9  12  11  11  -2  -5  -3  -2   0   0
```

# FIG.5

FIG. 6

FIG. 7

FIG. 8

FIG.9

S 1

| | | |
|---|---|---|
| 1 | 0.471 | -13 |
| D3 | D8 | D- |

FIG.10A

S 2

| | | |
|---|---|---|
| 0.733 | 1 | -15 |
| D3 | D8 | D- |

FIG.10B

S 3

| | | |
|---|---|---|
| 0.067 | 0.048 | 1 |
| D3 | D8 | D- |

FIG.10C